# EUROPÄISCHE PATENTSCHRIFT

(11) **EP 2 738 032 B1**
(45) Veröffentlichungstag und Bekanntmachung des Hinweises auf die Patenterteilung: **03.02.2016**
(21) Anmeldenummer: 12195065.3
(22) Anmeldetag: 30.11.2012
(51) Int. Cl.: B60K 15/06, F02M 37/00, F02M 37/10, B60K 15/03

(54) **Tanksystem für ein Kraftfahrzeug**
Tank system for a motor vehicle
Système de réservoir pour un véhicule automobile

(43) Veröffentlichungstag der Anmeldung: 04.06.2014
(73) Patentinhaber: Magna Steyr Fuel Systems GesmbH, 8261 Sinabelkirchen (AT)
(72) Erfinder: Kahler, Bernd, 8020 Graz (AT); Voglmeier, Wolfgang, 9334 Guttaring (AT)
(74) Vertreter: Zangger, Bernd

(56) Entgegenhaltungen:
- DE-A1- 2 621 188
- DE-A1- 4 301 761
- DE-A1- 19 833 696
- US-A- 5 447 175

## Beschreibung

### Gebiet der Erfindung

Die vorliegende Erfindung betrifft ein Tanksystem für ein Kraftfahrzeug, umfassend einen Tank, ein im Tank angeordnetes Reservoir, ein Einfüllrohr zur Befüllung des Tanksystems, eine Entnahmeeinheit die dazu eingerichtet ist, Kraftstoff aus dem Reservoir zu entnehmen und einer Antriebseinheit des Kraftfahrzeugs zuzuführen, und zumindest eine Zuführleitung, die das Reservoir mit dem Tank verbindet.

### Stand der Technik

Derartige Tanksysteme sind bekannt, wobei als Reservoir üblicherweise ein oben offener Topf verwendet wird. Der Topf wird so eingerichtet, dass sich, vor allem bei geringen Füllständen, der Kraftstoff im Topf sammelt. Hierzu wird beispielsweise ein Pilzventil am Boden des Topfs angeordnet.

Ein derartiger Speichertopf ist beispielsweise aus der DE 10 2007 039 861 A1 bekannt, die einen Kraftstofftank mit mindestens einem Sattel angibt, und mit einem im Bereich des Sattels vorgesehenen Schwappschutzmittel. In dem Speichertopf ist ein Förderaggregat angeordnet, welches Kraftstoff aus dem Speichertopf saugt und hierdurch Saugstrahlpumpen antreibt. Die Befüllung des Speichertopfs erfolgt beispielsweise mittels einer Topf-Saugstrahlpumpe.

Die EP 0 976 602 A2 offenbart einen Kraftstofftank mit einem innerhalb des Kraftstofftanks angeordneten Reservoir, dem eine motorisch angetriebene Pumpe zugeordnet ist, und mit einem Füllrohr, durch welches der Kraftstoff in den Kraftstofftank einströmt, wobei zumindest ein Teil des Kraftstoffs direkt in das Reservoir geführt wird. Eine Rückführleitung führt abgepumpten, überschüssigen Kraftstoff in einen das Reservoir umgebenden Raum zurück und ist an ihrem ausströmseitigen Ende mit einer Treibdüse einer Saugstrahlpumpe versehen, deren Fangdüse das einströmseitige Ende eines Überlaufrohres bildet, welches in das Reservoir mündet.

Die DE 43 01 761 A1 offenbart ein Tanksystem mit den Merkmalen des Oberbegriffs des Anspruchs 1 und mit einem Haupt- sowie einem Reservetank. Der Saugunterdruck einer Vorlaufpumpe kann dazu ausgenutzt werden, über eine Zuführleitung Kraftstoff aus einer Sammelzone in den Reservetank einzusaugen.

### Zusammenfassung der Erfindung

Es ist eine Aufgabe der Erfindung, ein kostengünstiges Tanksystem für ein Kraftfahrzeug anzugeben, dass einen zuverlässigen Betrieb auch bei geringer Kraftstoffmenge im Tanksystem ermöglicht. Insbesondere sollen die erforderliche Erstbetankungsmenge und die nicht absaugbare Restmenge des Kraftstoffs im Tanksystem reduziert werden.

Die Lösung der Aufgabe erfolgt durch ein Tanksystem für ein Kraftfahrzeug, umfassend einen Tank, ein im Tank angeordnetes Reservoir, ein Einfüllrohr zur Befüllung des Tanksystems, eine Entnahmeeinheit die dazu eingerichtet ist, Kraftstoff aus dem Reservoir zu entnehmen und einer Antriebseinheit des Kraftfahrzeugs zuzuführen, und zumindest eine Zuführleitung, die das Reservoir mit dem Tank verbindet, wobei das Reservoir in einem Normalbetriebsmodus des Kraftfahrzeugs ausschließlich an der Entnahmeeinheit und an der zumindest einen Zuführleitung offen ist, so dass durch eine Entnahme von Kraftstoff aus dem Reservoir durch 2012P00789 EP 15.11.2012 BZ die Entnahmeeinheit im Reservoir ein Unterdruck entsteht, wodurch über die zumindest eine Zuführleitung Kraftstoff aus dem Tank in das Reservoir gesaugt wird, wobei das Einfüllrohr direkt in das Reservoir mündet und im Normalbetriebsmodus verschlossen ist, wobei am Reservoir ein Ausströmmittel angeordnet ist, das dazu eingerichtet ist, ein Ausströmen von Kraftstoff aus dem Reservoir in den Tank zu ermöglichen, ein Einströmen von Kraftstoff aus dem Tank in das Reservoir aber zu verhindern, wobei durch das Ausströmmittel im Normalbetriebsmodus die Verbindung zwischen Reservoir und Tank geschlossen ist.

Im Gegensatz zu bekannten Schwalltöpfen ist das erfindungsgemäße Reservoir an jeder Seite luftdicht abgeschlossen und weist nur die erforderliche Öffnung zur Entnahme von Kraftstoff durch die Entnahmeeinheit auf und eine Verbindung zu einer Zuführleitung, welche das Reservoir mit dem Tank verbindet. Bei Entnahme von Kraftstoff durch die Entnahmeeinheit wird hierdurch Kraftstoff aus der zumindest einen Zuführleitung und somit aus dem Tank abgesaugt. Durch eine geeignete Anordnung des strömungsseitigen Endes oder mehrerer Enden von Zuführleitungen im Tank kann hierdurch die Kraftstoffzufuhr zur Entnahmeeinheit und hierdurch zur Antriebseinheit des Kraftfahrzeuges auch bei geringen Kraftstoffmengen sicher gestellt werden, ohne zusätzliche Hilfsmittel wie etwa Saugstrahlpumpen verwenden zu müssen.

Der Normalbetriebsmodus eines erfindungsgemäßen Tanksystems liegt insbesondere dann vor, wenn die Entnahmeeinheit Kraftstoff aus dem Reservoir entnimmt und der Antriebseinheit des Kraftfahrzeugs zuführt und das erfindungsgemäße Tanksystem nicht in einer außergewöhnlichen Betriebsart, wie zum Beispiel einem Notbetriebsmodus betrieben wird. Der Normalbetriebsmodus liegt beispielsweise nicht während der Betankung des Tanksystems vor.

Erfindungsgemäß mündet das Einfüllrohr direkt in das Reservoir und ist im Normalbetriebsmodus verschlossen. Dies wird beispielsweise durch einen luftdicht schließenden Tankverschluss am Ende des Einfüllrohres erreicht. Alternativ oder zusätzlich kann am unteren Ende des Einfüllrohres ein Schwimmerventil angeordnet sein, dass auf der Oberseite des Reservoirs montiert sein kann. So ist eine direkte Betankung des Reservoirs möglich, das Reservoir aber dennoch im Normalbetriebsmodus im Bereich des Einfüllrohres, insbesondere nahe am Tankverschluss oder nahe einem Schwimmerventil, geschlossen, so dass die Entstehung eines Unterdruckes im Reservoir ermöglicht wird.

Erfindungsgemäß ist am Reservoir ein Ausströmmittel angeordnet, das dazu eingerichtet ist, ein Ausströmen von Kraftstoff aus dem Reservoir in den Tank zu ermöglichen, ein Einströmen von Kraftstoff aus dem Tank in das Reservoir aber zu verhindern, wobei durch das Ausströmmittel im Normalbetriebsmodus die Verbindung zwischen Reservoir und Tank geschlossen ist. Ein derartiges Ausströmmittel kann beispielsweise ein geeignet eingerichtetes Pilzventil sein, das insbesondere in Einbaulage an der Oberseite des Reservoirs angebracht ist. Hierdurch wird sichergestellt, dass Kraftstoff während der Betankung des Reservoirs in den Tank gelangen kann, das Reservoir im Normalbetriebsmodus jedoch im Bereich des Ausströmmittels geschlossen ist, so dass die Entstehung eines Unterdruckes im Reservoir ermöglicht wird.

Weiterbildungen der Erfindung sind in den abhängigen Ansprüchen, der Beschreibung sowie den beigefügten Zeichnungen angegeben.

Zusätzlich zum Ausströmmittel kann das Einfüllrohr, insbesondere oberhalb eines Schwimmerventils, Öffnungen aufweisen, die einen Übertritt von Kraftstoff aus dem Einfüllrohr in den Tank ermöglichen. Auch durch derartige Öffnungen wird ermöglicht dass Kraftstoff vor allem nach der Befüllung des Reservoirs in den Tank ausströmen kann.

Besonders bevorzugt ist am in den Tank mündenden Ende der Zuführleitung ein Schwimmerventil angeordnet. Das Schwimmerventil kann so ausgeführt sein, dass ein Schwimmkörper des Schwimmerventils das Ventil schließt wenn der Schwimmkörper nicht mehr von Kraftstoff umgeben ist. Dadurch wird verhindert dass Luft durch den Unterdruck im Reservoir angesaugt wird. Insbesondere wenn mehrere Zuführleitungen mit jeweils einem Schwimmerventil die in verschiedene Bereiche des Tanks münden vorgesehen sind ist so auch bei Schräglage des Kraftfahrzeuges gewährleistet, dass zwar Kraftstoff von Zuführleitungen abgesaugt wird, deren Mündungen mit Kraftstoff umgeben sind, jedoch nicht Luft abgesaugt wird, wo kein Kraftstoff vorhanden ist.

Bevorzugt weist der Tank ein Mittel auf, dass die Entstehung eines Unterdrucks im Tank über einem vorgegeben maximalen Unterdruck verhindert, insbesondere ein Belüftungsventil. Hierdurch wird eine Deformation des Tanks durch zu starken Unterdruck verhindert.

Besonders bevorzugt weist das Reservoir ein Mittel auf, dass die Entstehung eines Unterdrucks im Reservoir über einem vorgegeben maximalen Unterdruck verhindert, insbesondere ein Sicherheitsventil. Vor allem bei niedrigem Füllstand des Kraftstoffs und dadurch geschlossenen Schwimmerventilen kann es zur Entstehung eines unerwünscht starken Unterdrucks im Reservoir kommen. Zur Verhinderung eines zu starken Unterdrucks kann, bevorzugt am Boden des Reservoirs, ein Sicherheitsventil angeordnet sein, welches im Normalbetriebsmodus geschlossen und über einem vorgegebenen maximalen Unterdruck, insbesondere zum Tank hin oder nach außerhalb des Tanks, geöffnet ist.

Besonders bevorzugt umfasst ein erfindungsgemäßes Tanksystem zumindest zwei Zuführleitungen oder eine Zuführleitung die sich an ihrem dem Tank zugewandten Ende in zumindest zwei Leitungen teilt. Die Enden der Zuführleitungen sind dann vorteilhaft räumlich im Tank verteilt, sodass auch bei Schräglage des Fahrzeuges oder abgetrennten Tankbereichen und geringem Kraftstoffniveau im Tank möglichst zumindest ein Ende einer Zuführleitung noch von Kraftstoff umgeben ist.

Gemäß einer Ausführungsform umfasst ein erfindungsgemäßes Tanksystem zumindest einen Zusatztank, wobei der Zusatztank mit dem Tank oder mit dem Reservoir, insbesondere ausschließlich, über eine Verbindungsleitung verbunden ist. Hierdurch kann das zur Verfügung stehende Tankvolumen vergrößert werden. Wenn der Zusatztank direkt mit dem Reservoir verbunden ist, kann durch den Unterdruck im Reservoir über die Verbindungsleitung Kraftstoff direkt aus dem Zusatztank angesaugt werden. Ein Abreißen der Flüssigkeitssäule in der Verbindungsleitung wird dann besonders effizient vermieden, sodass das Prinzip der kommunizierenden Gefäße und eines Saughebers genutzt werden können.

Bevorzugt weist ausschließlich der Zusatztank ein Mittel auf, das die Entstehung eines zu hohen Unterdrucks im Tank verhindert, insbesondere ein Belüftungsventil, vor allem wenn der Zusatztank über die Verbindungsleitung mit dem Tank verbunden ist. Die Belüftung des Tanksystems erfolgt dann ausschließlich über das Belüftungsventil des Zusatztanks, so dass ein zu starker Unterdruck im Tank nötigenfalls über den Zusatztank abgebaut wird. Die Verbindungsleitung kann an einem oder auch an mehreren Enden in den Zusatztank münden. Bevorzugt weisen die Enden der Verbindungsleitung im Zusatztank keine Schwimmerventile auf, um der Gefahr von Deformation durch zu starken Unterdruck im Tank vorzubeugen. Insbesondere wenn der Zusatztank über die Verbindungsleitung mit dem Reservoir verbunden ist, weisen bevorzugt der Tank und der Zusatztank Belüftungsventile auf.

Bevorzugt kann das Tanksystem, insbesondere mittels eines Drei-Wege-Ventils, vom Normalbetriebsmodus in einen Notbetriebsmodus geschaltet werden, wobei im Notbetriebsmodus die Entnahmeeinheit dazu eingerichtet ist, Kraftstoff direkt aus dem Tank zu entnehmen. Im Notbetriebsmodus wird daher der Kraftstoff von der Entnahmeeinheit nicht durch den Unterdruck im Reservoir über die Zuführleitungen angesaugt. Dadurch ist ein Notbetrieb des Kraftfahrzeuges möglich, wenn es zu Problemen mit Komponenten des erfindungsgemäßen Tanksystems kommt, beispielsweise mit dem Pilzventil.

### Kurzbeschreibung der Zeichnungen

Die Erfindung wird im Folgenden beispielhaft unter Bezugnahme auf die Zeichnungen beschrieben.
- Fig. 1: ist ein Hydraulikschema eines erfindungsgemäßen Tanksystems mit einem Tank.
- Fig. 2: ist ein Hydraulikschema eines erfindungsgemäßen Tanksystems mit einem Tank und einem Zusatztank.
- Fig. 3: ist ein Hydraulikschema eines weiteren erfindungsgemäßen Tanksystems mit einem Tank.
- Fig. 4: ist ein Hydraulikschema eines weiteren erfindungsgemäßen Tanksystems mit einem Tank und einem Zusatztank.

### Detaillierte Beschreibung der Erfindung

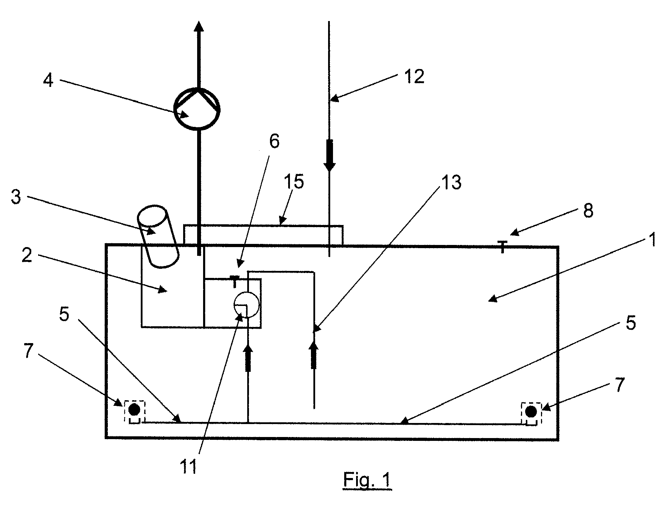

In Fig. 1 ist ein Tanksystem für ein Kraftfahrzeug dargestellt, mit einem Tank 1 und einem im Tank 1 angeordneten Reservoir 2. Am Tank 1 ist ein Servicedeckel 15 angeordnet. Ein Einfüllrohr 3 ermöglicht die direkte Betankung des Reservoirs 2 mit Kraftstoff. Mittels einer Entnahmeeinheit 4 die eine Kraftstoffpumpe umfasst, kann Kraftstoff aus dem Reservoir 2 entnommen und einer nicht dargestellten Antriebseinheit des Kraftfahrzeugs zugeführt werden. Ein Rücklauf 12 der Entnahmeeinheit 4 mündet in den Tank 1. An der Oberseite des Reservoirs 2 befindet sich als Ausströmmittel 6 ein Pilzventil, dass den Austritt von Kraftstoff aus dem Reservoir 2 in den umgebenden Tank 1 erlaubt. Die Zuführleitung 5 verbindet das Reservoir 2 mit zwei voneinander weit beabstandeten Bereichen in Bodennähe des Tanks 1. Die beiden Enden der Zuführleitung 5 sind mit jeweils einem Schwimmerventil 7 ausgestattet, wobei die Schwimmerventile 7 geöffnet sind solange sie von Kraftstoff umgeben sind. Durch die Entnahme von Kraftstoff aus dem Reservoir 2 mittels der Entnahmeeinheit 4 entsteht im Reservoir 2 ein Unterdruck, wodurch über die Zuführleitung 5 Kraftstoff aus dem Tank 1 in das Reservoir 2 gesaugt wird. Mittels des Drei-Wege-Ventils 11 kann das Tanksystem auf einen Notbetriebsmodus umgestellt werden, der einer konventionellen Betriebsart eines Tanksystems entspricht. In diesem Modus wird Kraftstoff über eine Notleitung 13 direkt aus dem Tank 1 gesaugt. Mittels eines Belüftungsventils 8 wird verhindert, dass ein zu großer Unterdruck im Tank 1 entsteht.

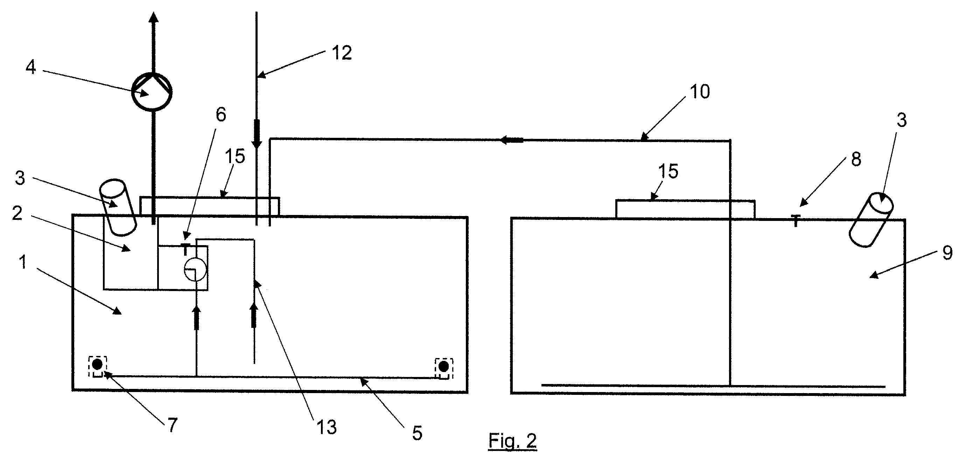

In der Ausführungsform eines Tanksystems gemäß Fig. 2 ist zusätzlich zum primären Tank 1 ein Zusatztank 9 zur Erhöhung des Tankvolumens vorgesehen. Der Zusatztank 9 ist über eine Verbindungsleitung 10 mit dem Tank 1 verbunden, so dass bei Entnahme von Kraftstoff aus dem Tank 1 durch den entstehenden Unterdruck im Tank 1 Kraftstoff über die Verbindungsleitung 10 aus dem Zusatztank 9 in den Tank 1 und weiter in das Reservoir 2 gelangen kann. Die Verbindungsleitung 10 verfügt über zwei Enden auf Seiten des Zusatztanks 9, die wie die Enden der Zuführleitung 5 in Bodennähe an verschiedenen Bereichen des Zusatztanks 9 angeordnet sind. Die Enden der Zuführleitung 5 weisen keine Schwimmerventile auf. In dieser Ausführungsform verfügt lediglich der Zusatztank 9 über ein Belüftungsventil 8.

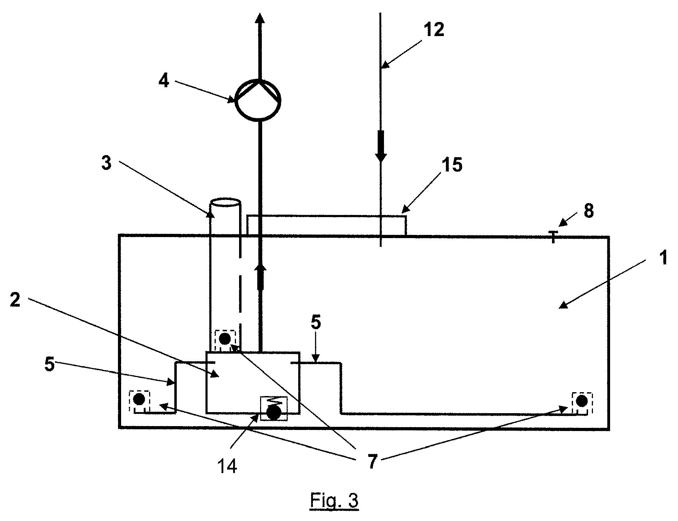

In der Ausführungsform eines erfindungsgemäßen Tanksystems gemäß Fig. 3 ist das Reservoir 2 am Boden des Tanks 1 fixiert um die Belastung im Bereich des Einfüllrohres 3 zu reduzieren. Das Einfüllrohr ist über ein, an der Oberseite des Reservoirs 2 montiertes Schwimmerventil mit dem Reservoir 2 verbunden und weist oberhalb des Schwimmerventils Öffnungen auf, die ein Ausströmen von Kraftstoff in den Tank 1 ermöglichen. Am Boden des Reservoirs 2 befindet sich ein Sicherheitsventil 14, dass bei zu starkem Unterdruck im Reservoir 2 die Verbindung zwischen Reservoir 2 und Tank 1 öffnet.

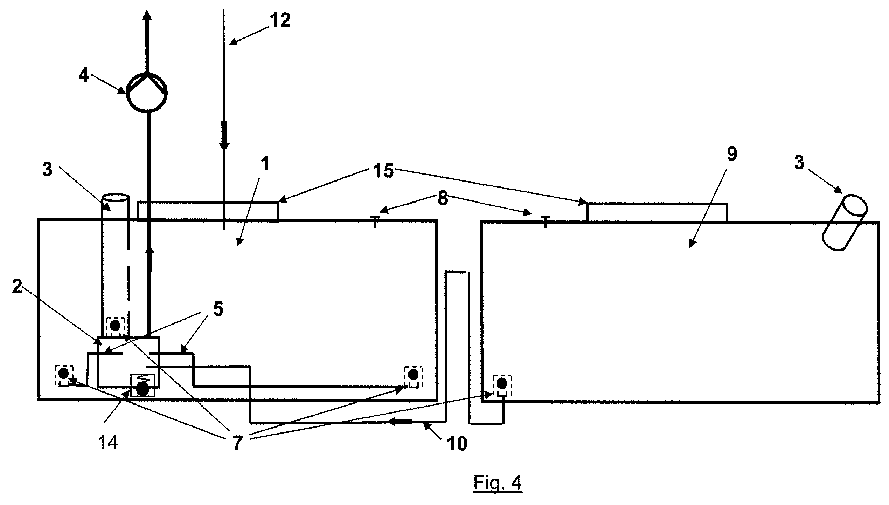

Die in Fig. 4 dargestellte Ausführungsform zeigt ein Tanksystem mit einem Tank 1, der ähnlich dem Tank 1 der Fig. 3 ausgeführt ist, und mit einem Zusatztank 9. Der Zusatztank 9 ist über eine Verbindungsleitung 10 direkt mit dem Reservoir 2 verbunden, so dass Kraftstoff auch aus dem Zusatztank 9 in das Reservoir 2 gesaugt werden kann. Wie an den Enden der Zuführleitungen 5 ist auch am Ende der Verbindungsleitung 10 das im Zusatztank 9 liegt, ein Schwimmerventil 7 angeordnet, welches geschlossen ist wenn kein Kraftstoff am Schwimmerventil 7 anliegt.

Die Erfindung ermöglicht somit in allen Ausführungsformen einen zuverlässigen Betrieb eines Tanksystems für ein Kraftfahrzeug auch bei geringer Kraftstoffmenge im Tanksystem.

### Bezugszeichenliste

- 1: Tank
- 2: Reservoir
- 3: Einfüllrohr
- 4: Entnahmeeinheit
- 5: Zuführleitung
- 6: Ausströmmittel
- 7: Schwimmerventil
- 8: Belüftungsventil
- 9: Zusatztank
- 10: Verbindungsleitung
- 11: Drei-Wege-Ventil
- 12: Rücklauf
- 13: Notleitung
- 14: Sicherheitsventil
- 15: Servicedeckel

## Patentansprüche

1. Tanksystem für ein Kraftfahrzeug, umfassend einen Tank (1), ein im Tank angeordnetes Reservoir (2), ein Einfüllrohr (3) zur Befüllung des Tanksystems, eine Entnahmeeinheit (4) die dazu eingerichtet ist, Kraftstoff aus dem Reservoir (2) zu entnehmen und einer Antriebseinheit des Kraftfahrzeugs zuzuführen, und zumindest eine Zuführleitung (5), die das Reservoir (2) mit dem Tank (1) verbindet, wobei das Reservoir (2) in einem Normalbetriebsmodus des Kraftfahrzeugs ausschließlich an der Entnahmeeinheit (4) und an der zumindest einen Zuführleitung (5) offen ist, so dass durch eine Entnahme von Kraftstoff aus dem Reservoir (2) durch die Entnahmeeinheit (4) im Reservoir (2) ein Unterdruck entsteht, wodurch über die zumindest eine Zuführleitung (5) Kraftstoff aus dem Tank (1) in das Reservoir (2) gesaugt wird, **dadurch gekennzeichnet, dass** das Einfüllrohr (3) direkt in das Reservoir (2) mündet und im Normalbetriebsmodus verschlossen ist, wobei am Reservoir (2) ein Ausströmmittel (6) angeordnet ist, das dazu eingerichtet ist, ein Ausströmen von Kraftstoff aus dem Reservoir (2) in den Tank (1) zu ermöglichen, ein Einströmen von Kraftstoff aus dem Tank (1) in das Reservoir (2) aber zu verhindern, wobei durch das Ausströmmittel (6) im Normalbetriebsmodus die Verbindung zwischen Reservoir (2) und Tank (1) geschlossen ist.

2. Tanksystem nach Anspruch 1, **dadurch gekennzeichnet, dass** am in den Tank (1) mündenden Ende der Zuführleitung (5) ein Schwimmerventil (7) angeordnet ist.

3. Tanksystem nach zumindest einem der vorhergehenden Ansprüche, **dadurch gekennzeichnet, dass** der Tank (1) ein Mittel aufweist, dass die Entstehung eines Unterdrucks im Tank (1) über einem vorgegeben maximalen Unterdruck verhindert, insbesondere ein Belüftungsventil (8).

4. Tanksystem nach zumindest einem der vorhergehenden Ansprüche, **dadurch gekennzeichnet, dass** das Reservoir (2) ein Mittel aufweist, dass die Entstehung eines Unterdrucks im Reservoir (2) über einem vorgegeben maximalen Unterdruck verhindert, insbesondere ein Sicherheitsventil (14).

5. Tanksystem nach zumindest einem der vorhergehenden Ansprüche, **dadurch gekennzeichnet dass** es zumindest zwei Zuführleitungen (5) umfasst.

6. Tanksystem nach zumindest einem der vorhergehenden Ansprüche, **dadurch gekennzeichnet dass** es zumindest einen Zusatztank (9) umfasst, wobei der Zusatztank (9) mit dem Tank (1) oder mit dem Reservoir (2) über eine Verbindungsleitung (10) verbunden ist.

7. Tanksystem nach Anspruch 6, **dadurch gekennzeichnet dass** der Zusatztank (9) ein Mittel aufweist, dass die Entstehung eines zu hohen Unterdrucks im Zusatztank (9) verhindert, insbesondere ein Belüftungsventil (8).

8. Tanksystem nach zumindest einem der vorhergehenden Ansprüche, **dadurch gekennzeichnet, dass** das Tanksystem, insbesondere mittels eines Drei-Wege-Ventils (11), vom Normalbetriebsmodus in einen Notbetriebsmodus geschaltet werden kann, wobei im Notbetriebsmodus die Entnahmeeinheit (4) dazu eingerichtet ist, Kraftstoff direkt aus dem Tank (1) zu entnehmen.

## Claims

1. Tank system for a motor vehicle, comprising a tank (1), a reservoir (2) which is arranged in the tank, a filling pipe (3) for filling the tank system, a removal unit (4) which is set up to remove fuel from the reservoir (2) and feed it to a drive unit of the motor vehicle, and at least one feed line (5) which connects the reservoir (2) to the tank (1), the reservoir (2) being open exclusively at the removal unit (4) and at the at least one feed line (5) in a normal operating mode of the motor vehicle, with the result that a vacuum is produced in the reservoir (2) as a result of a removal of fuel from the reservoir (2) by way of the removal unit (4), as a result of which fuel is sucked out of the tank (1) into the reservoir (2) via the at least one feed line (5), **characterized in that** the filling pipe (3) opens directly into the reservoir (2) and is closed in the normal operating mode, an outflow means (6) being arranged on the reservoir (2), which outflow means (6) is set up to make an outflow of fuel out of the reservoir (2) into the tank (1) possible, but to prevent an inflow of fuel out of the tank (1) into the reservoir (2), the connection between the reservoir (2) and the tank (1) being closed by way of the outflow means (6) in the normal operating mode.

2. Tank system according to Claim 1, **characterized in that** a float valve (7) is arranged at that end of the feed line (5) which opens into the tank (1).

3. Tank system according to at least one of the preceding claims, **characterized in that** the tank (1) has a means which prevents the generation of a vacuum in the tank (1) above a predefined maximum vacuum, in particular a ventilating valve (8).

4. Tank system according to at least one of the preceding claims, **characterized in that** the reservoir (2) has a means which prevents the generation of a vacuum in the reservoir (2) above a predefined maximum vacuum, in particular a safety valve (14).

5. Tank system according to at least one of the preceding claims, **characterized in that** it comprises at least two feed lines (5).

6. Tank system according to at least one of the preceding claims, **characterized in that** it comprises at least one additional tank (9), the additional tank (9) being connected to the tank (1) or to the reservoir (2) via a connecting line (10).

7. Tank system according to Claim 6, **characterized in that** the additional tank (9) has a means which prevents the generation of an excessively high vacuum in the additional tank (9), in particular a ventilating valve (8).

8. Tank system according to at least one of the preceding claims, **characterized in that** the tank system can be switched from the normal operating mode into an emergency operating mode, in particular by means of a three-way valve (11), the removal unit (4) being set up in the emergency operating mode to remove fuel directly from the tank (1).

## Revendications

1. Système de réservoir pour un véhicule automobile, comprenant un réservoir (1), un conteneur (2) disposé dans le réservoir, un tube de remplissage (3) pour remplir le système de réservoir, une unité de prélèvement (4) prévue pour prélever du carburant hors du conteneur (2) et pour l'acheminer à une unité d'entraînement du véhicule automobile, et au moins une conduite d'alimentation (5) qui relie le conteneur (2) au réservoir (1), le conteneur (2), dans un mode de fonctionnement normal du véhicule automobile, étant ouvert exclusivement au niveau de l'unité de prélèvement (4) et au niveau de l'au moins une conduite d'alimentation (5) de telle sorte que par un prélèvement de carburant hors du conteneur (2) par l'unité de prélèvement (4), une dépression se produise dans le conteneur (2), de sorte que du carburant puisse être aspiré par le biais de l'au moins une conduite d'alimentation (5) hors du réservoir (1) dans le conteneur (2), **caractérisé en ce que** le tube de remplissage (3) débouche directement dans le conteneur (2) et est fermé en mode de fonctionnement normal, un moyen de sortie (6) étant disposé au niveau du conteneur (2), lequel est prévu pour permettre une sortie de carburant hors du conteneur (2) dans le réservoir (1), mais pour empêcher un afflux de carburant depuis le réservoir (1) dans le conteneur (2), la liaison entre le conteneur (2) et le réservoir (1) étant fermée en mode de fonctionnement normal par le moyen de sortie (6).

2. Système de réservoir selon la revendication 1, **caractérisé en ce qu'**une soupape à flotteur (7) est disposée au niveau de l'extrémité de la conduite d'alimentation (5) débouchant dans le réservoir (1).

3. Système de réservoir selon au moins l'une quelconque des revendications précédentes, **caractérisé en ce que** le réservoir (1) présente un moyen qui empêche la création d'une dépression dans le réservoir (1) au-dessus d'une dépression maximale prédéfinie, en particulier une soupape de ventilation (8).

4. Système de réservoir selon au moins l'une quelconque des revendications précédentes, **caractérisé en ce que** le conteneur (2) présente un moyen qui empêche la création d'une dépression dans le conteneur (2) au-dessus d'une dépression maximale prédéfinie, en particulier une soupape de sécurité (14).

5. Système de réservoir selon au moins l'une quelconque des revendications précédentes, **caractérisé en ce qu'**il comprend au moins deux conduites d'alimentation (5).

6. Système de réservoir selon au moins l'une quelconque des revendications précédentes, **caractérisé en ce qu'**il comprend au moins un réservoir supplémentaire (9), le réservoir supplémentaire (9) étant connecté au réservoir (1) ou au conteneur (2) par le biais d'une conduite de liaison (10).

7. Système de réservoir selon la revendication 6, **caractérisé en ce que** le réservoir supplémentaire (9) présente un moyen qui empêche la création d'une dépression excessive dans le réservoir supplémentaire (9), en particulier une soupape de ventilation (8).

8. Système de réservoir selon au moins l'une quelconque des revendications précédentes, **caractérisé en ce que** le système de réservoir peut être commuté, en particulier au moyen d'une soupape à trois voies (11), du mode de fonctionnement normal dans un mode de fonctionnement de secours, l'unité de prélèvement (4), en mode de fonctionnement de secours, étant prévue pour prélever du carburant directement hors du réservoir (1).
